# EUROPÄISCHE PATENTSCHRIFT

(11) **EP 1 633 519 B1**
(45) Veröffentlichungstag und Bekanntmachung des Hinweises auf die Patenterteilung: **13.12.2006**
(21) Anmeldenummer: 04739930.8
(22) Anmeldetag: 16.06.2004
(51) Int. Cl.: B23D 79/00, F16D 69/04, B23P 15/18

(54) **KRIMP-VORRICHTUNG ZUM HERAUSARBEITEN VON ABSTEHENDEN KRIMPEN AUS EINER BREMSBELAGTRÄGERPLATTE**
DEVICE FOR FORMING PROTRUDING PARTS ON THE CARRIER PLATE OF A BRAKE-LINING
DISPOSITIF PERMETTANT DE FORMER DES PARTIES SAILLANTES SUR UNE PLAQUE DE SUPPORT DE GARNITURE DE FREIN

(30) Priorität: 16.06.2003 DE 10326962
(43) Veröffentlichungstag der Anmeldung: 15.03.2006
(73) Patentinhaber: Metek Metallverarbeitungs Gesellschaft mbH, 53340 Meckenheim (DE); TMD Friction Services GmbH, 51381 Leverkusen (DE)
(72) Erfinder: JUNG, Friedrich, Hans, 65620 Waldbrunn-Ellar (DE); JUNG, Alexander, 65582 Diez (DE); SCHLITT, Friedrich, 65589 Hadamar-Steinbach (DE)
(74) Vertreter: Müller, Eckhard
(86) Internationale Anmeldenummer: PCT/EP2004/006462
(87) Internationale Veröffentlichungsnummer: WO 2004/113004

(56) Entgegenhaltungen:
- WO-A-00/49308
- CA-C- 1 337 622

## Beschreibung

Die Erfindung betrifft eine Krimp-Vorrichtung zum Herausarbeiten von abstehenden Zähen, Spänen, Krimpen oder dergleichen aus einer Bremsbelagträgerplatte, wobei ein Werkzeug mittels einer Pressplatte in die Bremsbelagträgerplatte hineingetrieben und anschließend wieder von dieser entfernt wird, das Werkzeug aus mehreren gegenläufig gegeneinander verstellbaren Werkzeugelementen mit Schneidzähnen, zum Beispiel Sägewerkzeugelemente besteht, und die Werkzeugelemente während des Krimp-Vorganges in einer Ebene zweiachsig in einer ersten Achse und in einer hierzu senkrechten zweiten Achse verfahren werden, wobei die erste Achse mit einer Flächennormalen der Bremsbelagträgerplatte im wesentlichen übereinstimmt, und Zwangsführungsmittel zum Verfahren der Werkzeugelemente in Richtung der zweiten Achse vorgesehen sind (siehe WO 00/49308).

Eine derartige Krimp-Vorrichtung ist bereits aus der WO 00/49308 bekannt. Dabei werden die Werkzeuge über ein Zusammenwirken der Keilflächen eines Gleitschiebers und eines Arbeitsschlittens während des eigentlichen Herausarbeitens der Vorsprünge, Zähne, Späne oder dergleichen in Richtung der zweiten Achse verschoben. Die Bewegung der Werkzeuge in Richtung der ersten Achse wird mittels eines Spanmechanismus mit Einstellfedern durchgeführt. Diese Einstellfedern sollen dazu beitragen, die Vorrichtung auf verschiedenen Pressen mit unterschiedlichen Kräftespezifikationen montieren zu können, wobei sichergestellt sein soll, dass auf die Werkzeuge eine konstante Kraft unabhängig von dem von der Presse ausgeübtem Druck wirkt. Die Rückführung der Werkzeuge nach dem Herausarbeiten der Vorsprünge erfolgt über eine Federvorspannung. Nachteilig bei dieser Vorrichtung erweist sich, dass insbesondere beim Entfernen des Werkzeuges von der bearbeiteten Bremsbelagträgerplatte die Gefahr besteht, herausgearbeitete Vorsprünge, Zähne, Späne oder dergleichen mittels des Werkzeuges abzubrechen.

Die US 3 557 407 zeigt eine Vorrichtung sowie ein Verfahren zum Krimpen beziehungsweise Erzeugen von Vorsprüngen und zugeordneten Vertiefungen in einer Metallplatte, bei der zwei kooperierende Rollen vorgesehen sind, zwischen denen die Metallplatte hindurchgeführt wird. Auf der Außenfläche einer der Rollen sind eine Vielzahl von Elementen, wie scharfe Zähne mit keilförmiger Form, vorgesehen, die beim Hindurchführen der Metallplatte in deren Oberfläche hineingetrieben werden. Hierdurch erfährt die Metallplatte eine Aufrauung beziehungsweise eine Oberflächenverzahnung, in dem entsprechende Späne oder Zähne aus der Oberfläche der Metallplatte heraus gearbeitet werden.

Aus der CA 133 76 22 ist es bereits bekannt, benachbart zueinander angeordnete Werkzeugkörper mit Schneidezähnen in entgegengesetzte Richtung durch Druckbeaufschlagung zu verfahren, so dass die Zähne die Vertiefungen und Vorsprünge aus dem Material einer Platte herausarbeiten. Dabei ist es vorgesehen, dass ein druckbeaufschlagtes Element in eine kurvenförmige Ausnehmung der leicht versetzt zueinander angeordneten Werkzeuge, insbesondere Sägeblätter oder dergleichen, eintaucht und durch Entlangfahren an der Kurve dieser kurvenförmigen Ausnehmung gleichzeitig eine horizontale Verschiebung sowie eine Absenkung der Sägeblätter gegen die zu bearbeitende Platte steuert.

Demgegenüber liegt der vorliegenden Erfindung die Aufgabe zugrunde, eine verbesserte Krimp-Vorrichtung mit den eingangs genannten Merkmalen anzugeben, bei der für ein reproduzierbares Herausarbeiten der abstehenden Vorsprünge, Zähne, Späne oder dergleichen aus der Bremsbelagträgerplatte gesorgt ist und einem Abbrechen dieser abstehenden Vorsprünge beim Entfernen des Werkzeuges entgegengewirkt ist.

Diese Aufgabe wird bei der Krimp-Vorrichtung mit den eingangs genannten Merkmalen dadurch gelöst, dass weitere Zwangssteuerungsmittel zwischen Pressplatte und Werkzeug beziehungsweise Werkzeugelementen angeordnet sind, welche einen Keilschieber und einen Führungsschieber mit korrespondierenden Schrägflächen umfassen, die für ein zwangsgesteuertes Verfahren der Werkzeugelemente in Richtung der ersten Achse sorgen.

Aufgrund dieser Maßnahmen ist es möglich, das Werkzeug zweiachsig in einer Ebene zwangsgesteuert zu bewegen, so dass zum einen ein definiertes Krimpen der Bremsbelagträgerplatte ermöglicht und zum anderen auch eine definiertes Entfernen der Werkzeuge von der Bremsbelagträgerplatte ermöglicht ist, ohne das die Gefahr des Abbrechens der Krimpen bzw. der abstehenden Zähne, Späne oder dergleichen besteht.

Nach einer ersten vorteilhaften Ausführungsform der Erfindung ist es vorgesehen, dass zwischen Pressplatte und Keilschieber ein Distanzstück angeordnet ist.

Weiterhin bietet es sich an, dass der Führungsschieber sich durch eine Druckplatte erstreckt und mittels eines Führungskörpers in dieser geführt ist.

Eine andere vorteilhafte Ausgestaltung der Erfindung besteht darin, dass in dem Führungsschieber ein mittels einer Druckfeder belasteter Niederhalter angeordnet ist, mit dem die bereits bearbeitete Bremsbelagträgerplatte beim Entfernen des Werkzeuges nieder gehalten werden kann.

Auch bietet es sich an, dass der Keilschieber sich über ein Keilstück auf der Druckplatte abstützt, wobei Keilschrägen von Keilschieber und Keilstück miteinander korrespondieren.

Eine andere vorteilhafte Ausgestaltung besteht darin, dass der Keilschieber mittels einer Druckfeder, welche sich an dem zweiten Führungsschieber abstützt, vorgespannt ist.

Nach der Erfindung ist es möglich, dass das Keilstück in die Druckplatte eingehängt ist und sich mittels einer Druckfeder an dieser abstützt.

Von Vorteil besitzt das Keilstück an einem durch die Druckplatte hindurch greifenden Abschnitt eine Aufnahme für eine Werkzeugträgeraufnahme für die Werkzeugelemente.

Weiterhin ist es vorgesehen, dass die Werkzeugelemente in Richtung der zweiten Achse angeordnete Langlöcher aufweisen, durch welche sich insbesondere lösbare Haltestifte der Werkzeugträgeraufnahme erstrecken. Zum einen ist hierdurch ein leichter Austausch der Werkzeugelemente nach Verschleiß ermöglicht. Zum anderen werden durch diese Maßnahmen die Vorraussetzung dafür geschaffen, dass benachbarte Werkzeugelemente gegenläufig gegeneinander verfahrbar sind.

Die Haltestifte können in schräg bezüglich der ersten und/oder zweiten Achse angeordneten Langlöchern geführt sein, welche in mit den Führungsschiebern fest verbundenen Stirnplatten angeordnet sind.

Von besonderem Vorteil sind nach einer eigenständigen Ausgestaltung der Erfindung die Zwangsführungsmittel durch beidseitig der Werkzeugelemente angeordnete Kniehebelvorrichtungen gebildet, welche beim Absenken der Pressplatte benachbarte Werkzeugelemente gegenläufig zueinander bewegen.

Dabei bietet es sich an, dass die Kniehebelvorrichtungen mittels in Richtung der ersten Achse positionierten Betätigungsstangen der Pressplatte angesteuert werden, welche auf Kniegelenke wirken.

Auch ist es vorgesehen, dass die Kniehebelvorrichtungen Hebel aufweisen, die gegen die Vorspannung von Federelementen spreizbar sind.

Von Vorteil sind äußere Hebel gelenkig mit einem Führungsgehäuse und inneren Hebel gelenkig mit Schiebelementen verbunden, wobei die Schiebeelemente die Werkzeugelemente außenseitig beaufschlagen.

Von Vorteil führt jedes der Werkzeugelemente während eines Arbeitstaktes in der Ebene im wesentlichen senkrecht zum Belagsträgerplatte eine zwangsgeführte, zweiachsige schaukelartige oder schwenkende Hin-und-Her-Bewegung beim Absenken und Anheben der Pressplatte durch.

Weiterhin ist es vorgesehen, dass zwei Werkzeuge mit Werkzeugelementen seitlich beabstandet voneinander vorgesehen sind.

Weitere Vorteile, Ausgestaltungen und Anwendungsmöglichkeiten der vorliegenden Erfindung ergeben sich aus der nachfolgenden Beschreibung eines Ausführungsbeispieles anhand der Zeichnung.

Es zeigen:
- Figur 1 bis 3: ein Ausführungsbeispiel einer erfindungsgemäßen Vorrichtung in einer oberen Stellung der Pressplatte, einer mittigen Stellung der Pressplatte sowie einer unteren Endstellung der Pressplatte,
- Figur 4: eine Schnittdarstellung durch die Vorrichtung der Figur 1 im Bereich der Zwangssteuerungsmittel,
- Figur 5: eine perspektivische Ansicht der Vorrichtung mit abgenommener Pressplatte,
- Figur 6: eine Draufsicht auf die erfindungsgemäße Vorrichtung bei abgenommener Pressplatte,
- Figur 7: eine Detaildarstellung Z der Figur 3 und
- Figur 8: einen Ausschnitt der Vorrichtung gemäß Figuren 1 bis 3 im Bereich der Werkzeuge.

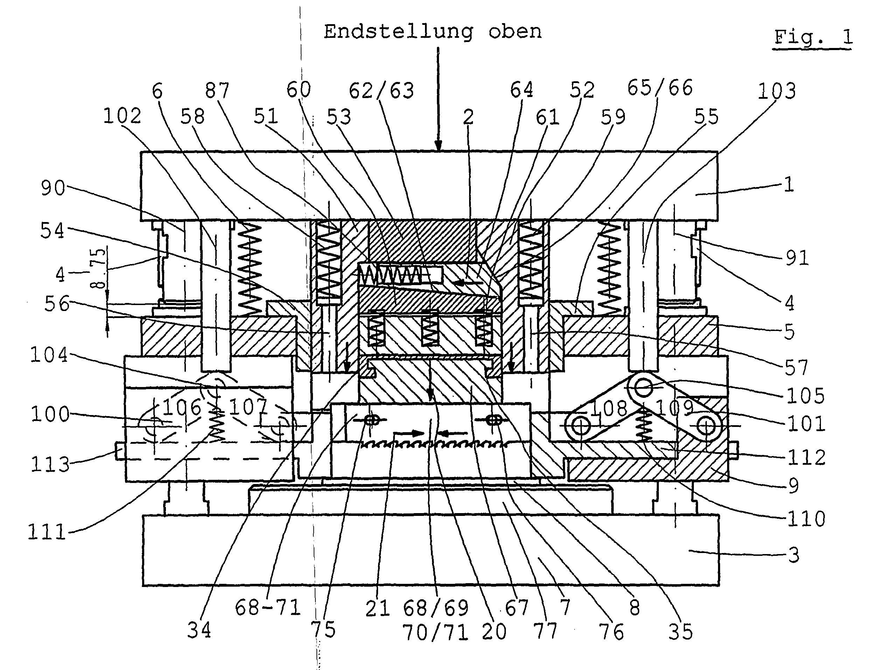

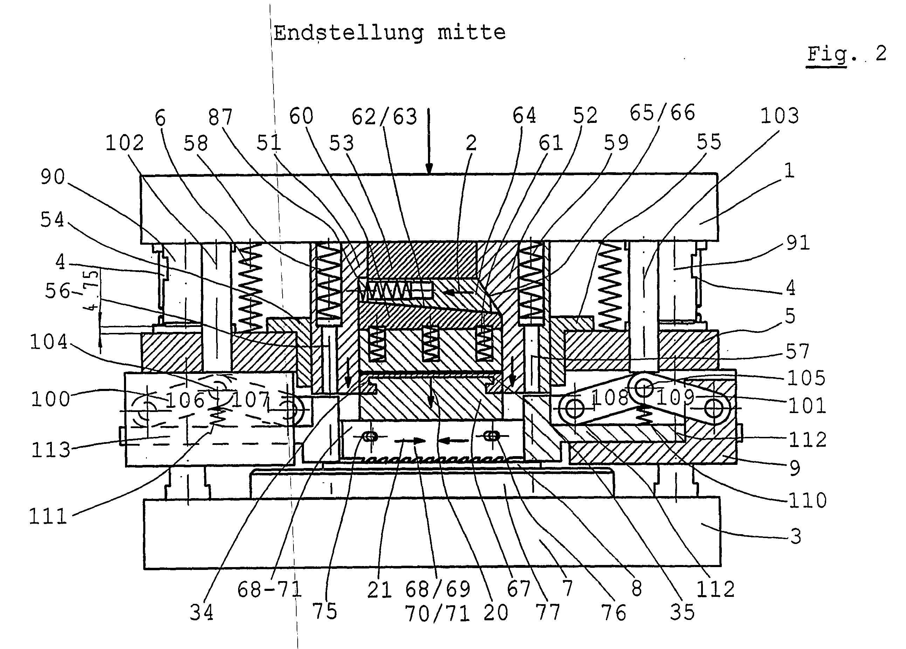

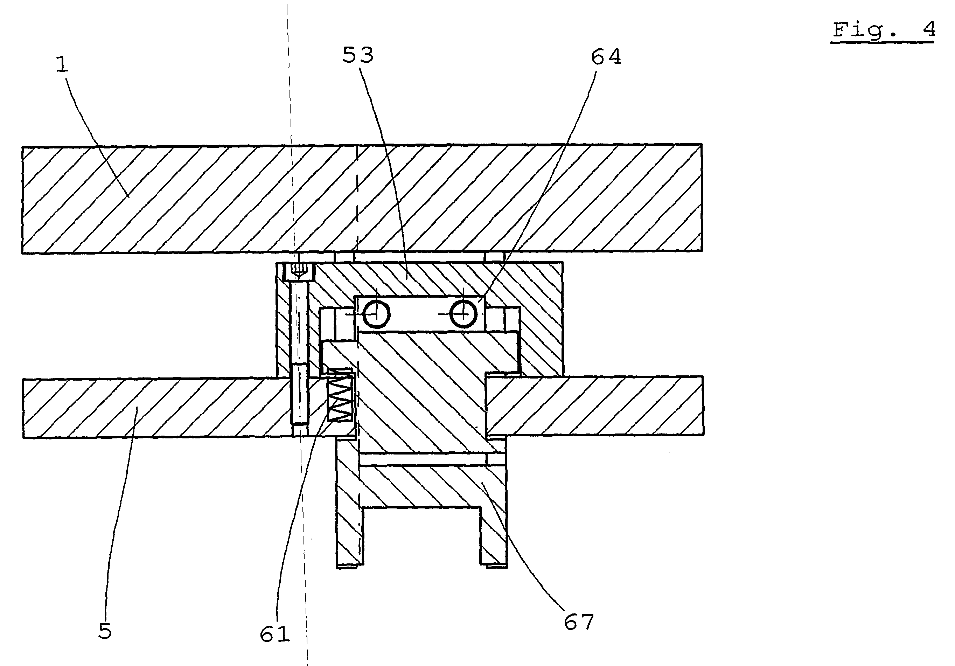

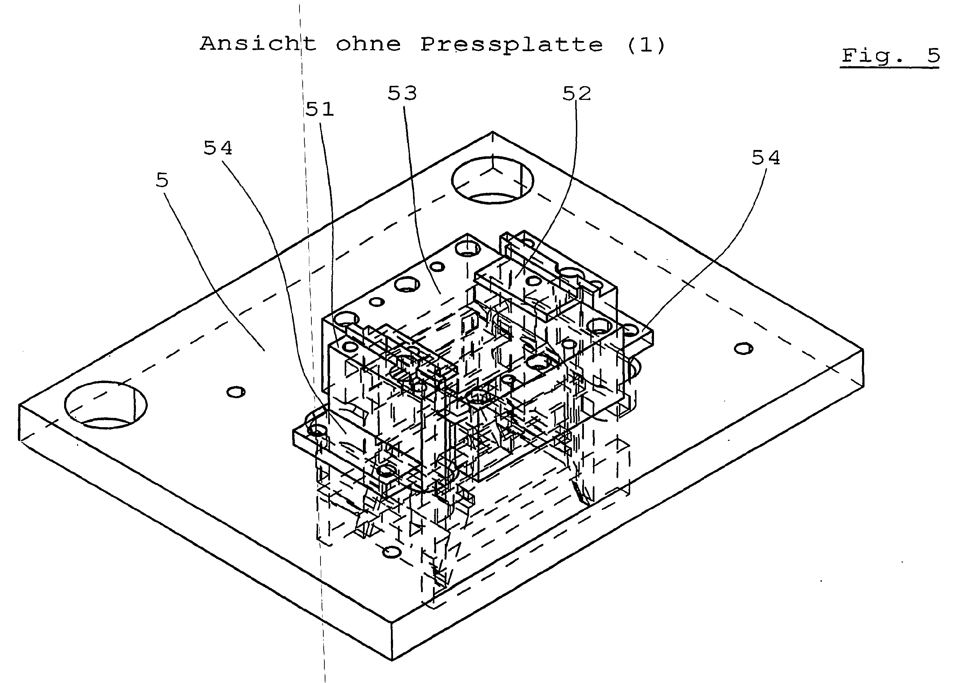

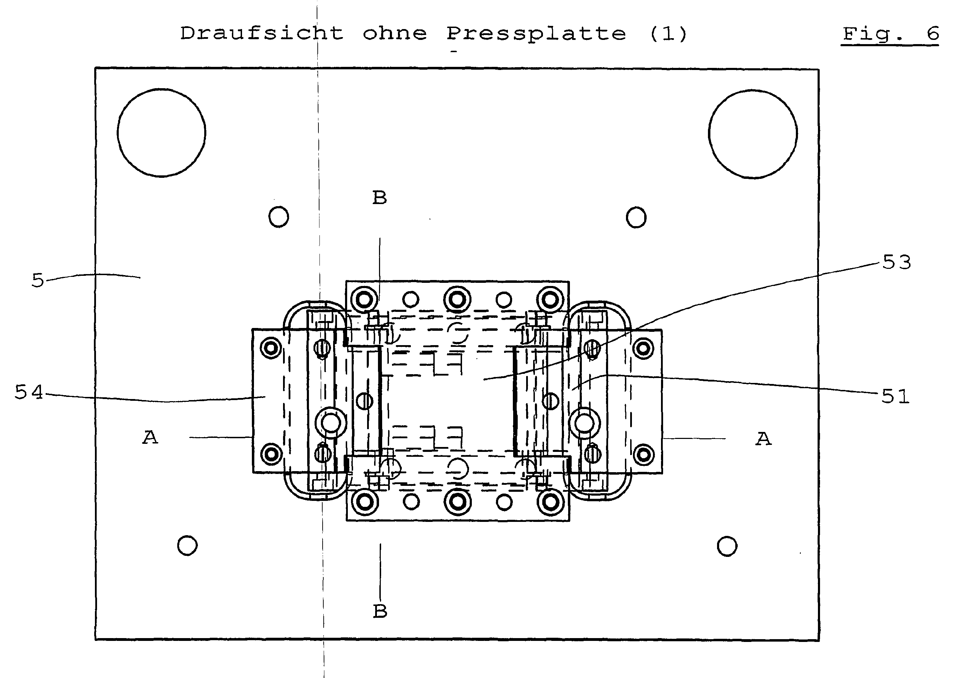

Unter Bezugnahme auf die beiliegenden Zeichnungen Figur 1 bis 7 wird die Vorrichtung zum Krimpen von Belagsträgerplatten 8 beschrieben.

Das Werkzeug zur Herstellung der Oberflächenaufrauhung beziehungsweise zur Erzeugung von Zähnen in der Oberfläche von Belagsträgerplatten 8 weist eine Pressplatte 1 auf, an welcher zwei Führungsschieber 51, 52 unter Zwischenlage eines Distanzstückes 53 in Abstand voneinander angeordnet sind. Die beiden Führungsschieber 51, 52 erstrecken sich durch eine Druckplatte 5. Für die Führung der beiden Führungsschieber 51, 52 an der Druckplatte 5 sind Führungskörper 54, 55 vorgesehen.

In den beiden Führungsschiebern 51, 52 sind mittels Druckfedern 58, 59 belastete Niederhalter 56, 57 angeordnet, welche beim Anheben des Werkzeuges von der soeben bearbeiteten Belagsträgerplatte 8 ein Niederhalten dieser Belagsträgerplatte 8 bewirken.

In die Druckplatte 5 ist ein Keilstück 60 eingehängt, welches sich einerseits mittels der Druckfeder 61 auf der Druckplatte 5 abstützt und nach oben mittels einer Keilschräge 62 an einer korrespondierenden Keilschräge 63 eines Schiebers 64 anliegt. Der Schieber 64 ist in Pfeilrichtung 2 verschiebbar an dem Distanzstück 53 geführt und gleichzeitig von einem an dem Distanzstück 53 angeordneten Gehäuse gehalten.

Der Schieber 64 weist an seiner einen Stirnseite eine Formschräge 65 auf, welche an einer korrespondierenden Schrägführung 66 des einen Führungsschiebers 52 anliegt. Dabei ist der Schieber 64 mittels einer Druckfeder 67, welche sich an dem gegenüberliegenden Führungsschieber 51 abstützt, auf Druck gegen diese Schrägfläche 66 des einen Führungsschiebers 52 gedrückt.

Das Keilstück 60 weist an seinem durch die Druckplatte 5 hindurchgreifenden unteren Ende eine Aufnahme für eine Werkzeugaufnahme 67 auf. Die Aufnahme für die Werkzeugaufnahme 67 weist zwei Nuten 34, 35 auf, in welche die Werkzeugträgeraufnahme 67 eingeschoben wird.

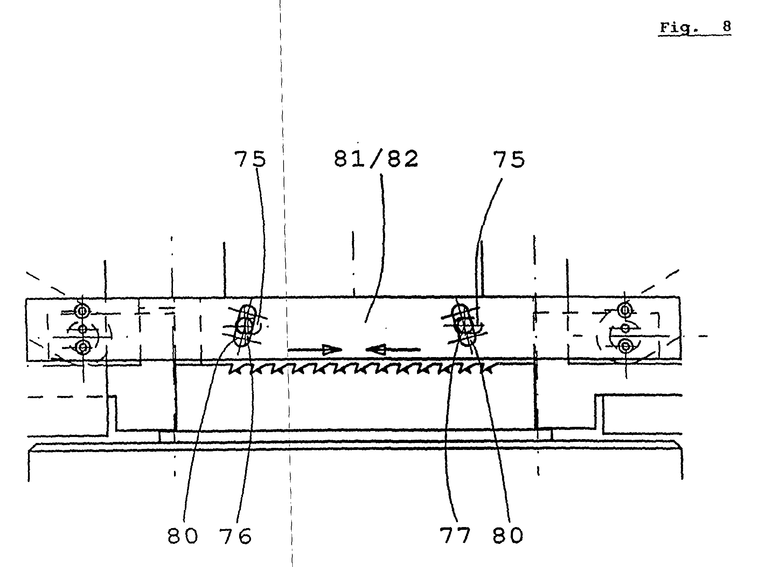

In der U-förmigen Werkzeugträgeraufnahme 67 sind die einzelnen Werkzeuge in Form von Sägeblättern 68, 69, 70, 71 gehalten, wobei in den Sägeblättern Langlöcher 75 angeordnet sind, durch welche sich Haltestifte 76, 77 der Werkzeugträgeraufnahme 67 erstrecken wie dies aus Figur 8 ersichtlich ist. Diese Haltestifte sind lösbar, um die Sägeblätter 68 bis 71 auswechseln zu können.

Die sich durch die Langlöcher 75 erstreckenden Haltestifte 76 erstrecken sich weiterhin durch schräg angeordnete Langlöcher 80 von mit dem Führungsschiebern 51, 52 fest verbundenen Stirnplatten 81, 82. Durch diese schräg gestellten Langlöcher 80 wird eine Zwangsführung der Werkzeuge 68 bis 71 beim Anheben der Werkzeugträgeraufnahme beziehungsweise der Werkzeuge von dem gerade bearbeiteten Werkstück erreicht, so dass die Werkzeuge 68 bis 71 in ihre vor der Bearbeitung angenommene Stellung verfahren werden.

Nachfolgend wird die Arbeitsweise der Vorrichtung beschrieben.

Ausgehend von einer Ausgangsstellung der Pressplatte 1 gemäß Figur 1 befindet sich die Werkzeugträgeraufname 67 mit Werkzeugen 68-71 in angehobener Stellung oberhalb der zu bearbeitenden Belagsträgerplatte 8. Wenn nun Druck auf die Pressplatte 1 ausgeübt wird, wird die Pressplatte 1 zusammen mit der Druckplatte 5 auf den Säulen 4 nach unten in Richtung des zu bearbeitenden Werkstückes 8 verschoben. Dabei wird die Druckfeder 6 um ein gewisses Maß gestaucht, welches der Reibungskraft der Druckplatte 5 an den Säulen 4 entspricht. Die Druckfedern 6 bewirken eine gewisse Dämpfung, wenn bei der Absenkbewegung die Werkzeuge 68-71 auf dem zu bearbeitenden Werkstück 8 aufsetzen und die Pressplatte 1 mittels Anschlägen 90, 91 an der Druckplatte 5 anschlägt.

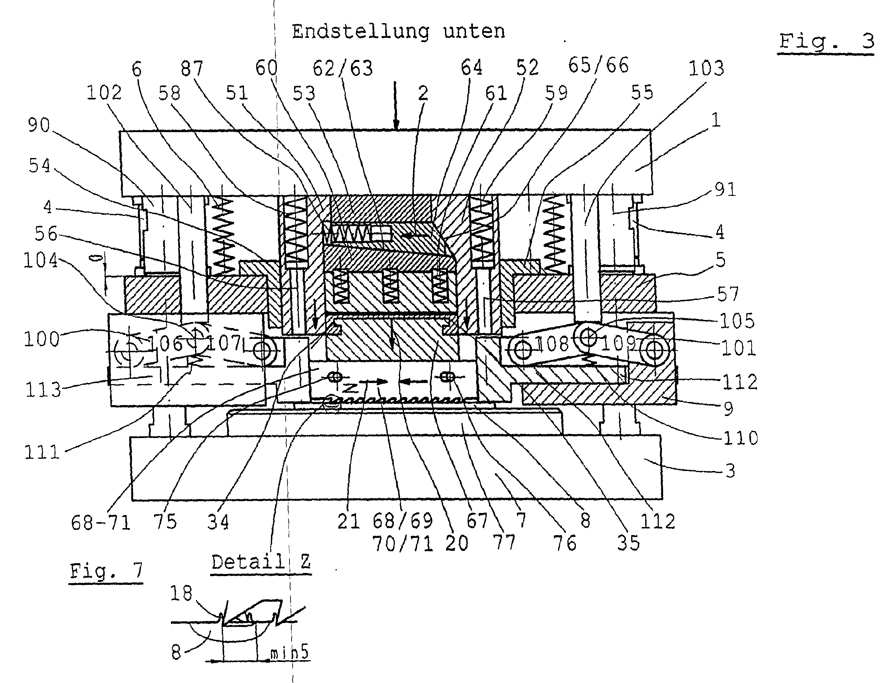

Ein weiteres Absenken der Pressplatte 1 bewirkt nun, dass der Schieber 64 mit seiner stirnseitigen Formschräge 65 längs der Schrägführung 66 des Führungsschiebers 52 gleitet, und zwar in Pfeilrichtung wie in Figur 2 dargestellt. Hierdurch kommt es zu einem Absenken der Werkzeugträgeraufnahme 67 mit Werkzeugen 68 bis 71 in Richtung des zu bearbeitenden Werkstückes 8 mit Eingraben der Zähne in das Werkstück. Beidseitig der Sägeblättern 68 bis 71 befinden sich Kniehebelvorrichtungen 100, 101, welche beim Absenken der Pressplatte 1 die Sägeblättern 68 bis 71 gegenläufig zueinander bewegen wie aus Figur 3 ersichtlich. Dies erfolgt dadurch, dass an der Pressplatte 1 vertikale Betätigungsstangen 102, 103 angeordnet sind, welche auf das Kniegelenk 104, 105 wirken und dabei die beiden Hebel 106, 107 bzw. 108, 109 gegen die Kraft eines Federelementes 110, 111 spreizen. Der jeweils nach innen weisende Hebel 107 bzw. 108 ist gelenkig mit den Schiebeelementen 112, 113, welche die Werkzeuge 68 bis 71 in horizontaler Richtung gegeneinander verschieben. Die nach außen weisenden Hebel 106, 109 sind gelenkig mit einem Führungsgehäuse 9 verbunden. Diese beiden Bewegungen, das heißt die Absenkbewegung der Werkzeuge mittels der nach unten gerichteten Druckkraft des Schiebers 64 und die horizontale Bewegung der Messer vermittels der Schieber 112, 113, überlagern sich und bewirken das Krimpen des Werkstückes.

Durch Anheben der Pressplatte 1 kommen die Niederhalter 102, 103 zur Wirkung, wodurch das bereits bearbeitete Werkstück auf der Aufnahme 7 gehalten wird.

Beim Anheben der Pressplatte 1 verfahren auch die Betätigungsstangen 102, 103 in den Durchbrechungen des Gehäuses 5 nach oben, wodurch die Hebel 106, 107 bzw. 108, 109 in Richtung aufeinander zu verschwenken. Hierdurch werden die Schieber 112, 113 in ihre Ausgangsstellung zurückgefahren. Damit kommt es nicht zu einem Abbrechen der soeben erzeugten Krimpen beziehungsweise Vorsprünge 18.

Beim Verschieben des Schiebers 64 während der Absenkbewegung der Pressplatte 1 wird das Druckstück 60 gegen die Kraft der Druckfedern 61 gedrückt. Diese Druckfedern 61 bewirken auch, dass der Schieber 64 mit seiner stirnseitigen Schräge 65 an der Schrägfläche 66 anliegt.

Aus Figur 7, einer Ausschnittvergrößerung des Details Z der Figur 3, ist ersichtlich, wie die Vorsprünge 18, Zähne, Krimpen oder dergleichen aus der Belagträgerplatte 8 mittels der Werkzeugelemente 68 bis 71 herausgearbeitet werden. Weiterhin ist auch ersichtlich, dass durch ein benachbartes Blatt die Vorsprünge 18 durch eine entgegengesetzte Bewegung herausgearbeitet werden.

Eine weitere Ausgestaltung der Erfindung besteht darin, bei Bremsträgerplatten für Lastkraftwagen zwei Werkzeuge im seitlichen Abstand nebeneinander anzuordnen, wobei während eines Arbeitstaktes jeweils eine Hälfte von zwei Belagsträgerplatten 8 gemeinsam bearbeitet wird.

### Bezugszeichenliste

- 1: Pressplatte
- 2: Pfeilrichtung
- 4: Säule
- 5: Druckplatte
- 6: Druckfeder
- 8: Belagsträgerplatte
- 9: Führungsgehäuse
- 18: Vorsprung, Zapfen, Zahn, Krimpe
- 20: erste Achse
- 21: zweite Achse
- 34: Nuten
- 35: Nuten
- 51: Führungsschieber
- 52: Führungsschieber
- 53: Distanzstück
- 54: Führungskörper
- 55: Führungskörper
- 56: Niederhalter
- 57: Niederhalter
- 58: Druckfeder
- 59: Druckfeder
- 60: Keilstück
- 61: Druckfeder
- 62: Keilschräge
- 63: Keilschräge
- 64: Schieber
- 65: Formschräge
- 66: Schrägführung
- 67: Werkzeugaufnahme
- 68: Sägeblatt
- 69: Sägeblatt
- 70: Sägeblatt
- 71: Sägeblatt
- 75: Langlöcher
- 76: Haltestifte
- 80: Langlöcher
- 81: Stirnplatten
- 82: Stirnplatten
- 87: Druckfeder
- 90: Anschlag
- 91: Anschlag
- 100: Kniehebel
- 101: Kniehebel
- 102: Betätigungsstange
- 103: Betätigungsstange
- 104: Kniegelenk
- 105: Kniegelenk
- 106: Hebel
- 107: Hebel
- 108: Hebel
- 109: Hebel
- 110: Federelement
- 111: Federelement
- 112: Schiebeelement
- 113: Schiebeelement

## Patentansprüche

1. Krimp-Vorrichtung zum Herausarbeiten von abstehenden Vorsprüngen (18), Zähnen, Spänen, Krimpen oder dergleichen, aus einer Bremsbelagsträgerplatte (8), wobei ein Werkzeug mittels einer Pressplatte (1) in die Bremsbelagsträgerplatte (8) hineingetrieben und anschließend wieder von dieser entfernt wird, das Werkzeug aus mehreren gegenläufig gegeneinander verstellbaren Werkzeugelementen (68, 69, 70, 71) mit Schneidezähnen, zum Beispiel Sägeblätter, besteht und die Werkzeugelemente (68 bis 71) während des Krimp-Vorganges in einer Ebene zweiachsig in einer ersten Achse (20)und in einer hierzu senkrechten zweiten Achse (21) verfahren werden, wobei die erste Achse (20) mit einer Flächennormalen der Bremsbelagsträgerplatte (8) im wesentlichen übereinstimmt beziehungsweise fluchtet, und Zwangsführungsmittel zum Verfahren der Werkzeugelemente (68 bis 71) in Richtung der zweiten Achse vorgesehen sind, **dadurch gekennzeichnet, dass** Zwangssteuerungsmittel zwischen Pressplatte (1) und Werkzeugelementen (68, 71) angeordnet sind, welche einen Keilschieber (64) und Führungsschieber (52) mit korrespondierenden Schrägflächen (65, 66) umfassen, die für ein zwangsgesteuertes Verfahren der Werkzeugelemente (68-71) in Richtung der ersten Achse (20) ausgebildet sind.

2. Vorrichtung nach Anspruch 1, **dadurch gekennzeichnet, dass** zwischen Pressplatte (1) und Keilschieber (64) ein Distanzstück (53) angeordnet ist.

3. Vorrichtung nach Anspruch 1 oder 2, **dadurch gekennzeichnet, dass** der Führungsschieber (52) sich durch eine Druckplatte (5) erstreckt und mittels eines Führungskörpers (55) in dieser geführt ist.

4. Vorrichtung nach einem der vorhergehenden Ansprüche, **dadurch gekennzeichnet, dass** in den Führungsschieber (52) ein mittels einer Druckfeder (59) belasteter Niederhalter (57) angeordnet ist.

5. Vorrichtung nach einem der vorhergehenden Ansprüche, **dadurch gekennzeichnet, dass** der Keilschieber (64) sich über ein Keilstück (60) auf der Druckplatte (5) abstützt, wobei Keilschrägen (62, 63) miteinander korrespondieren.

6. Vorrichtung nach einem der vorhergehenden Ansprüche, **dadurch gekennzeichnet, dass** der Keilschieber (64) mittels einer Druckfeder (67), welche sich an dem zweiten Führungsschieber (51) abstützt, vorgespannt ist.

7. Vorrichtung nach einem der vorhergehenden Ansprüche, **dadurch gekennzeichnet, dass** das Keilstück (60) in die Druckplatte eingehängt ist und sich mittels einer Druckfeder (61) an dieser abstützt.

8. Vorrichtung nach einem der vorhergehenden Ansprüche, **dadurch gekennzeichnet, dass** das Keilstück (60) an einem durch die Druckplatte (5) hindurchgreifenden Abschnitt eine Aufnahme für eine Werkzeugträgeraufnahme (67) für die Werkzeugelemente (68 bis 71) besitzt.

9. Vorrichtung nach einem der vorhergehenden Ansprüche, **dadurch gekennzeichnet, dass** die Werkzeugelemente (68-71) in Richtung der zweiten Achse angeordnete Langlöcher (75) aufweisen, durch welche sich insbesondere lösbare Haltestifte (76) der Werkzeugträgeraufnahme (77) erstrecken.

10. Vorrichtung nach einem der vorhergehenden Ansprüche, **dadurch gekennzeichnet, dass** die Haltestifte (76) in schräg bezüglich der ersten und/oder der zweiten Achse (20, 21) angeordneten Langlöchern (28) geführt sind, welche in mit den Führungsschiebern (51, 52) fest verbundenen Stirnplatten (81, 82) angeordnet sind.

11. Vorrichtung nach einem der vorhergehenden Ansprüche, **dadurch gekennzeichnet, dass** die Zwangsführungsmittel durch beidseitig der Werkzeugelemente (68-72) angeordnete Kniehebelvorrichtungen (100, 101) gebildet sind, welche beim Absenken der Pressplatte (1) benachbarte Werkzeugelemente (68-72) gegenläufig zueinander bewegen.

12. Vorrichtung nach Anspruch 11, **dadurch gekennzeichnet, dass** die Kniehebelvorrichtung (100, 101) mittels in Richtung der ersten Achse (20) positionierte Betätigungsstangen ( 102, 103) der Pressplatte (1) angesteuert werden, welche auf Kniegelenke (104, 105) wirken.

13. Vorrichtung nach Anspruch 11 oder 12, **dadurch gekennzeichnet, dass** die Kniehebelvorrichtung (100, 101) Hebel (106, 107 beziehungsweise 108, 109) aufweist, die gegen die Vorspannung von Federelementen (110, 111) spreizbar sind.

14. Vorrichtung nach Anspruch 13, **dadurch gekennzeichnet, dass** die äußeren Hebel (106, 109) gelenkig mit einem Führungsgehäuse (9) und die inneren Hebel (107, 108) gelenkig mit Schiebeelementen (112, 113) verbunden sind, wobei die Schiebeelemente (112, 113) die Werkzeugelemente (68 bis 72) außenseitig beaufschlagen.

15. Vorrichtung nach einem der vorhergehenden Ansprüche, **dadurch gekennzeichnet, dass** jedes der Werkzeugelemente (68 bis 71) während eines Arbeitstaktes in der im wesentlichen senkrecht zur Belagträgerplatte (8) eine zwangsgeführte zweiachsige schaukelartige oder schwenkende Hin-und-Her-Bewegung beim Absenken und Anheben der Pressplatte (1) durchführt.

16. Vorrichtung nach einem der vorhergehenden Ansprüche, **dadurch gekennzeichnet, dass** zwei Werkzeuge mit Werkzeugelementen (68-72) seitlich beabstandet voneinander vorgesehen sind.

## Claims

1. Crimping device for working protruding projections (18), teeth, slivers, crimps or the like out of a brake lining carrier plate (8), wherein a tool is driven by means of a press plate (1) into the brake lining carrier plate (8) and subsequently removed therefrom again, the tool consists of a several tool elements (68, 69, 70, 71), which are adjustable relative to one another in opposite sense, with cutting teeth, for example saw blades, and the tool elements (68 to 71) during the crimping process are moved in a plane biaxially in a first axis (20) and a second axis (21) perpendicular thereto, wherein the first axis (20) substantially corresponds or is aligned with a surface normal of the brake lining carrier plate (8), and constrained guide means for movement of the tool elements (68 to 71) in the direction of the second axis are provided, **characterised in that** constrained control means are provided between press plate (1) and tool elements (68 to 71) and comprise a wedge slide (64) and guide slide (52) with corresponding inclined surfaces (65, 66), which are formed for a constrainedly controlled movement of the tool elements (68 to 71) in the direction of the first axis (20).

2. Device according to claim 1, **characterised in that** a spacer (53) is arranged between press plate (1) and wedge slide (64).

3. Device according to claim 1 or 2, **characterised in that** the guide slide (52) extends through a pressure plate (5) and is guided therein by means of a guide body (55).

4. Device according to one of the preceding claims, **characterised in that** a holding-down device (57) loaded by means of a compression spring (59) is arranged in the guide slide (52).

5. Device according to one of the preceding claims, **characterised in that** the wedge slide (64) is supported on the pressure plate (5) by way of a wedge member (60), wherein the wedge inclines (62, 63) correspond with one another.

6. Device according to one of the preceding claims, **characterised in that** the wedge slide (64) is biased by means of a compression spring (67) supported at the second guide slide (61).

7. Device according to one of the preceding claims, **characterised in that** the wedge member (60) is suspended in the pressure plate and supported thereat by means of a compression spring (61).

8. Device according to one of the preceding claims, **characterised in that** the wedge member (60) has at a section, which engages through the pressure plate (5), a receptacle for a tool carrier mount (67) for the tool elements (68 to 71).

9. Device according to one of the preceding claims, **characterised in that** the tool elements (68 to 71) have slots (75) which are arranged in the direction of the second axis and through which, in particular, releasable retaining pins (76) for the tool carrier mount (77) extend.

10. Device according to one of the preceding claims, **characterised in that** the retaining pins (76) are guided in slots (28) which are arranged at an inclination with respect to the first and/or second axis (20, 21) and which are disposed in end plates (81, 82) fixedly connected with the guide slides (51, 52).

11. Device according to one of the preceding claims, **characterised in that** the constrained guide means are formed by toggle lever devices (100, 101) which are arranged at both sides of the tool elements (68 to 72) and which on lowering of the press plate (1) move adjacent tool elements (68 to 72) relative to one another in opposite sense.

12. Device according to claim 11, **characterised in that** the toggle lever devices (100, 101) are controlled in drive by means of actuating rods (102, 103), which are positioned in the direction of the first axis (20) and act on toggle joints (104, 105), of the press plate (1).

13. Device according to claim 11 or 12, **characterised in that** the toggle lever device (100, 101) comprises levers (106, 107 or 108, 109) which can be splayed against the bias of spring elements (110, 111).

14. Device according to claim 13, **characterised in that** the outer levers (106, 109) are pivotably connected with a guide housing (9) and the inner levers (107, 108) are pivotably connected with slide elements (112, 113), wherein the slide elements (112, 113) act on the tool elements (68 to 72) at the outer side.

15. Device according to one of the preceding claims, **characterised in that** each of the tool elements (68 to 71) during a working cycle performs a constrainably guided biaxial swinging or pivoting reciprocating motion in the [plane] substantially perpendicular to the lining carrier plate (8) when the press plate (1) is lowered and raised.

16. Device according to one of the preceding claims, **characterised in that** two tools are provided with tool elements (68 to 72) laterally spaced from one another.

## Revendications

1. Dispositif permettant de former des saillies (18), dents, aspérités, crispations ou éléments similaires sur une plaque de support de garniture de frein (8), un outil étant enfoncé au moyen d'une plaque de pressage (1) dans la plaque de support de garniture de frein (8) et étant ensuite retiré de celle-ci, l'outil étant formé par plusieurs éléments d'outil (68, 69, 70, 71), qui peuvent être déplacés en sens opposé les uns par rapport aux autres et qui comportent des dents de coupe, par exemple des lames de scie, et les éléments d'outil (68, 69, 70, 71) étant déplacés pendant le processus de formation de saillies dans un plan suivant deux axes, à savoir un premier axe (20) et un deuxième axe (21) perpendiculaire à ce dernier, le premier axe (20) coïncidant sensiblement ou étant aligné sensiblement avec une normale de surface de la plaque de support de garniture de frein (8), et des moyens de guidage forcé pour le déplacement des éléments d'outil (68 à 71) étant prévus dans la direction du deuxième axe, **caractérisé en ce que** des moyens de commande forcée sont disposés entre la plaque de pressage (1) et les éléments d'outil (68, 71) et comportent un curseur en coin (64) et un curseur de guidage (52) avec des surfaces obliques correspondantes (65, 66), qui sont réalisés pour un déplacement par commande forcée des éléments d'outil (68 à 71) dans la direction du premier axe (20).

2. Dispositif selon la revendication 1, **caractérisé en ce qu'**un élément d'écartement (53) est disposé entre la plaque de pressage (1) et le curseur en coin (64).

3. Dispositif selon la revendication 1 ou 2, **caractérisé en ce que** le curseur de guidage (52) passe à travers une plaque de pression (5) et est guidé dans celle-ci au moyen d'un corps de guidage (55).

4. Dispositif selon l'une quelconque des revendications précédentes, **caractérisé en ce qu'**un dispositif de retenue (57), sollicité par un ressort de pression (59), est agencé dans le curseur de guidage (52).

5. Dispositif selon l'une quelconque des revendications précédentes, **caractérisé en ce que** le curseur en coin (64) prend appui sur la plaque de pression (5) par l'intermédiaire d'une clavette (60), des faces inclinées de coin (62, 63) se correspondant mutuellement.

6. Dispositif selon l'une quelconque des revendications précédentes, **caractérisé en ce que** le curseur en coin (64) est précontraint par un ressort de pression (67), qui prend appui sur le deuxième curseur de guidage (51).

7. Dispositif selon l'une quelconque des revendications précédentes, **caractérisé en ce que** la clavette (60) est accrochée dans la plaque de pression et prend appui sur celle-ci au moyen d'un ressort de pression (61).

8. Dispositif selon l'une quelconque des revendications précédentes, **caractérisé en ce que** la clavette (60), sur une partie passant à travers la plaque de pression (5), comporte un logement destiné à recevoir un support d'outil (67) pour les éléments d'outil (68 à 71).

9. Dispositif selon l'une quelconque des revendications précédentes, **caractérisé en ce que** les éléments d'outil (68 à 71) comportent des trous oblongs (75), qui sont disposés dans la direction du deuxième axe et à travers lesquels passent des ergots de fixation (76) du support d'outil (77), notamment amovibles.

10. Dispositif selon l'une quelconque des revendications précédentes, **caractérisé en ce que** les ergots de fixation (76) sont guidés dans des trous oblongs (28), qui sont disposés en oblique par rapport au premier et/ou au deuxième axe (20, 21) et qui sont réalisés dans des plaques frontales (81, 82) fermement reliées aux curseurs de guidage (51, 52).

11. Dispositif selon l'une quelconque des revendications précédentes, **caractérisé en ce que** les moyens de guidage forcé sont formés par des dispositifs à genouillère (100, 101), qui sont disposés de part et d'autre des éléments d'outil (68 à 72) et par lesquels des éléments d'outil (68 à 72) adjacents sont déplacés en sens opposé les uns aux autres lors de l'abaissement de la plaque de pressage (1).

12. Dispositif selon la revendication 11, **caractérisé en ce que** les dispositifs à genouillère (100, 101) sont activés au moyen de tiges de manoeuvre (102, 103) de la plaque de pressage (1), lesquelles sont positionnées dans la direction du premier axe (20) et agissent sur des leviers à genouillère (104, 105).

13. Dispositif selon la revendication 11 ou 12, **caractérisé en ce que** le dispositif à genouillère (100, 101) comporte des leviers (106, 107 et, respectivement, 108, 109) qui sont aptes à s'écarter à l'encontre de la précontrainte exercée par des éléments à ressort (110, 111).

14. Dispositif selon la revendication 13, **caractérisé en ce que** les leviers extérieurs (106, 109) sont reliés de manière articulée avec un boîtier de guidage (9) et les leviers intérieurs (107, 108) sont reliés de manière articulée avec des éléments coulissants (112, 113), les éléments coulissants (112, 113) sollicitant du côté extérieur les éléments d'outil (68 à 72).

15. Dispositif selon l'une quelconque des revendications précédentes, **caractérisé en ce que** chacun des éléments d'outil (68 à 71), au cours d'un cycle de travail, effectue lors de l'abaissement et du relevage de la plaque de pressage (1) un mouvement de va-et-vient basculant ou pivotant à guidage forcé suivant deux axes, sensiblement perpendiculairement à la plaque de support de garniture de frein (8).

16. Dispositif selon l'une quelconque des revendications précédentes, **caractérisé en ce qu'**il est prévu deux outils comportant des éléments d'outils (68 à 72) et situés à distance latérale l'un de l'autre.
